# EUROPEAN PATENT SPECIFICATION

(11) **EP 4 550 862 B1**
(45) Date of publication and mention of the grant of the patent: **22.04.2026**
(21) Application number: 23830464.6
(22) Date of filing: 29.06.2023
(51) Int. Cl.: H04W 12/06, H04W 76/00, H04W 12/50, H04W 12/77, H04W 84/12, H04W 12/08, G06K 17/00, H04W 76/10, H04W 48/16

(54) **METHOD AND APPARATUS FOR DEVICE TO ACCESS WIRELESS NETWORK, AND STORAGE MEDIUM**
VERFAHREN UND VORRICHTUNG FÜR EINE VORRICHTUNG FÜR DEN ZUGRIFF AUF EIN DRAHTLOSES NETZWERK UND SPEICHERMEDIUM
PROCÉDÉ ET APPAREIL POUR UN DISPOSITIF D'ACCÈS À UN RÉSEAU SANS FIL, ET SUPPORT DE STOCKAGE

(30) Priority: 30.06.2022 CN 202210761672
(43) Date of publication of application: 07.05.2025
(73) Proprietor: Shining 3D Tech Co., Ltd., Hangzhou, Zhejiang 311258 (CN)
(72) Inventor: CHEN, Jinming, Hangzhou, Zhejiang 311258 (CN); LI, Zhouqiang, Hangzhou, Zhejiang 311258 (CN); JIANG, Tengfei, Hangzhou, Zhejiang 311258 (CN)
(74) Representative: Novagraaf Group
(86) International application number: PCT/CN2023/104197
(87) International publication number: WO 2024/002300

(56) References cited:
- WO-A1-2014/117493
- CN-A- 102 932 793
- CN-A- 104 008 325
- CN-A- 106 376 057
- CN-A- 107 979 730
- CN-A- 111 126 096
- CN-A- 112 188 595
- CN-A- 112 188 595
- CN-A- 113 596 832
- CN-A- 115 802 345

## Description

### Technical Field

The present disclosure relates to the field of data processing, and in particular to a method and apparatus for a device to access a wireless network.

### Background

A wireless oral scanning device needs to be bound to a computer through WiFi, and the wireless oral scanning device is controlled by scanning software arranged in the computer. When the wireless oral scanning device is bound to the computer, the wireless oral scanning device and the computer to be bound need to be in the same local area network.

In the related art, the computer sends account and password information of the WiFi of the local area network where the computer is located to the wireless oral scanning device through Bluetooth, and the wireless oral scanning device logs in to the local area network where the computer is located based on the received account and password information of the WiFi. This method has the following disadvantages that Bluetooth hardware needs to be installed in the wireless oral scanning device, which may increase the device size of the wireless oral scanning device and affect the use of the wireless oral scanning device, and this method has the problem of slow connection. That is, in the related art, there is a technical problem that the wireless oral scanning device cannot conveniently and quickly access a wireless network. CN 102932793 A and CN 112188595 A relate to a wireless network authentication method, and CN 104008325 A relate to network distribution method for a wireless scanning gun. For the above problems, no effective solution has been proposed.

### Summary

Embodiments of the present disclosure provide a method and apparatus for a device to access a wireless network, and a storage medium, so as to at least solve the technical problem that a wireless oral scanning device cannot conveniently and quickly access a wireless network.

According to one aspect of the present invention, a method for a device to access a wireless network is defined in claim 1.

Alternatively, before the target device scans the target identifier, the method further includes: determining whether the target device is in a code scanning mode; and in a case where the target device is not in the code scanning mode, switching the target device to the code scanning mode.

Alternatively, the operation of accessing the target wireless network based on the authentication information includes: sending the authentication information to a network authentication server; receiving an authentication result sent by the network authentication server; and accessing the target wireless network in a case where the authentication result is that the login authority authentication is passed.

Alternatively, the authentication information for logging in to the target wireless network includes account and password information of the target wireless network.

Alternatively, the authentication information for logging in to the target wireless network includes an account of the target wireless network, and the operation of accessing the target wireless network based on the authentication information includes: determining, by the oral scanning device, whether the account of the target wireless network is one of pre-stored accounts of a plurality of wireless networks according to the account of the target wireless network and the pre-stored accounts and passwords of the plurality of wireless networks; wherein the account of the target wireless network is one of the pre-stored accounts of the plurality of wireless networks, accessing the target wireless network based on the account of the target wireless network and the pre-stored password of the target wireless network; and when the account of the target wireless network is not one of the stored accounts of the plurality of wireless networks, receiving, by the oral scanning device, the password of the target wireless network, and accessing the target wireless network based on the account and the password of the target wireless network.

Alternatively, the target identifier includes one of the following: a one-dimensional barcode, a two-dimensional barcode, and a marker point image. The target device scans the target identifier, where the target identifier includes one of the following: the marker point image generated by a target terminal in a case where the target device has been connected to the target wireless network, the one-dimensional barcode generated by the target terminal in a case where the target device has not been connected to the target wireless network, and the two-dimensional barcode generated by the target terminal in a case where the target device has not been connected to the target wireless network.

According to another aspect of the present invention, a method for a device to access a wireless network is further defined in claim 10.

Alternatively, the operation of acquiring authentication information for logging in to a target wireless network in response to the barcode generation operation, and generating a target identifier based on the authentication information includes: acquiring a model of the target device; acquiring a barcode size corresponding to the model of the target device based on the model of the target device; and generating the target identifier based on the barcode size.

According to another aspect of the embodiments of the present disclosure, a method for a device to access a wireless network is further provided, including: acquiring, by a target terminal, authentication information for logging in to a target wireless network in response to a barcode generation operation, generating a target identifier based on the authentication information, and displaying the target identifier on a target interface; and scanning, by the target device, the target identifier, identifying the authentication information contained in the target identifier, and accessing the target wireless network based on the acquired authentication information, where the target device includes an oral scanning device.

According to another aspect of the present invention, an apparatus for a device to access a wireless network is further defined in claim 12.

According to another aspect of the embodiments of the present disclosure, a non-volatile storage medium is further provided, including a stored program. The program, when running, controls a device where the storage medium is located to perform any one of the above methods for the device to access the wireless network.

In the embodiments of the present disclosure, the target device scans the target identifier, where the target identifier contains the authentication information for logging in to the target wireless network, and the target device includes the oral scanning device; the authentication information for logging in to the target wireless network, which is contained in the target identifier, is identified; and the target wireless network is accessed based on the authentication information, thereby solving the technical problem in the related art that the wireless oral scanning device cannot conveniently and quickly access the wireless network.

### Brief Description of the Drawings

The drawings described herein are used to provide a further understanding of the present disclosure, and constitute a part of the present disclosure, and the exemplary embodiments of the present disclosure and the description thereof are used is located explain the present disclosure, but do not constitute improper limitations to the present disclosure. In the drawings:
Fig. 1 is a flowchart of a method for a device to access a wireless network according to the related art.
Fig. 2 is a schematic diagram of an alternative marker point image provided according to embodiments of the present disclosure.
Fig. 3 is a schematic diagram of another alternative marker point image provided according to embodiments of the present disclosure.
Fig. 4 is a schematic diagram of yet another alternative marker point image provided according to embodiments of the present disclosure.
Fig. 5 is a flowchart of another method for a device to access a wireless network according to embodiments of the present disclosure.
Fig. 6 is a flowchart of yet another method for a device to access a wireless network according to embodiments of the present disclosure.
Fig. 7 is a structural block diagram of an alternative apparatus for a device to access a wireless network according to embodiments of the present disclosure.

### Detailed Description of the Embodiments

In order to enable those skilled in the art to better understand the solutions of the present disclosure, the technical solutions in the embodiments of the present disclosure will be clearly and completely described below in combination with the drawings in the embodiments of the present disclosure. It is apparent that the described embodiments are only part of the embodiments of the present disclosure, not all the embodiments. All other embodiments obtained by those of ordinary skill in the art on the basis of the embodiments in the present disclosure without creative work shall fall within the scope of protection of the present disclosure.

It is to be noted that the terms "first", "second" and the like in the specification, claims and the above drawings of the present disclosure are configured to distinguish similar objects rather than to describe a specific sequence or a precedence order. It is to be understood that the data used in such a way may be exchanged where appropriate, in order that the embodiments of the present disclosure described here can be implemented in an order other than those illustrated or described herein. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

### Embodiment 1

According to the embodiments of the present disclosure, embodiments of a method for a device to access a wireless network are provided. It is to be noted that the steps shown in the flowchart of the drawings may be executed in a computer system, such as a set of computer-executable instructions, and although a logical sequence is shown in the flowchart, in some cases, the steps shown or described may be executed in a different order than here.

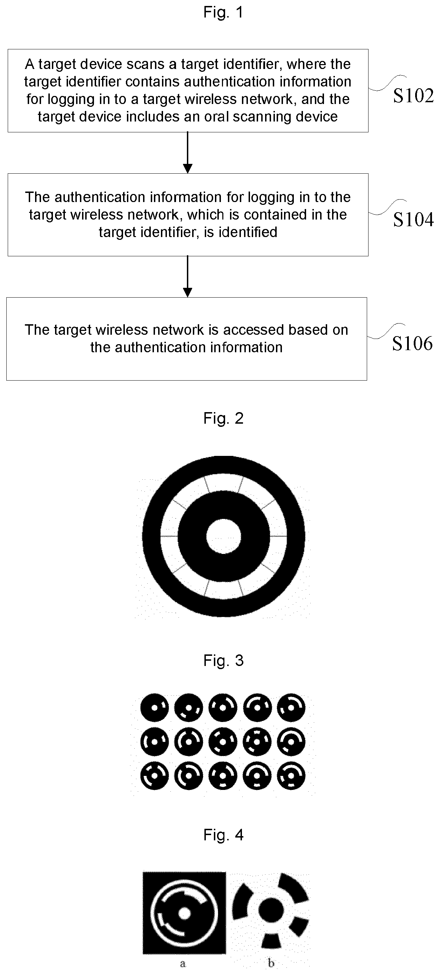

Fig. 1 is a flowchart of a method for a device to access a wireless network according to embodiments of the present disclosure, as shown in Fig. 1, the method includes the following steps.

At S102, a target device scans a target identifier, wherein the target identifier contains authentication information for logging in to a target wireless network, and the target device includes an oral scanning device.

In some alternative embodiments, the target identifier is an image containing the authentication information for logging in to the target wireless network, where there are various types of images, for example, a one-dimensional barcode, a two-dimensional barcode (two-dimensional code), a marker point image, and the like.

In some alternative embodiments, the target wireless network may be a WiFi network or a mobile hotspot. The target device includes the oral scanning device. The oral scanning device is provided with a two-dimensional code parsing module, and the two-dimensional code parsing module is loaded with a two-dimensional code parsing program. There are various types of two-dimensional code parsing programs, for example, program device firmware.

At S104, the authentication information for logging in to the target wireless network, which is contained in the target identifier, is identified.

At S106, the target wireless network is accessed based on the authentication information.

In some alternative embodiments, the target device scans the target identifier to identify the authentication information for logging in to the target wireless network, which is contained in the target identifier; and the target wireless network is accessed based on the authentication information, thereby solving the technical problem in the related art that the wireless oral scanning device cannot conveniently and quickly access the wireless network.

In some alternative embodiments, the target identifier is generated based on a barcode size corresponding to a model of the target device. It is to be understood that the size of the oral scanning device is usually relatively small, and the size of a scanning head of the oral scanning device is also relatively small. The target identifier is generated based on the barcode size corresponding to the model of the oral scanning device, and the size of the target identifier is matched with the size of the scanning head of the oral scanning device, so that the oral scanning device may scan the complete target identifier and successfully acquire the information contained in the target identifier, thereby avoiding the problem that the complete target identifier cannot be scanned due to the mismatch between the size of the target identifier and the size of the scanning head.

In some alternative embodiments, before the target device scans the target identifier, the method further includes: determining whether the target device is in a code scanning mode; and in a case where the target device is not in the code scanning mode, switching the target device to the code scanning mode. By switching the target device to the code scanning mode, the oral scanning device may successfully scan the target identifier.

In some alternative embodiments, the target identifier is a two-dimensional code, and before the target device scans the target identifier, the method further includes: determining whether the target device is in a two-dimensional code scanning mode; and in a case where the target device is not in the two-dimensional code scanning mode, switching the target device to the two-dimensional code scanning mode. By switching the target device to the two-dimensional code scanning mode, the oral scanning device may successfully scan the target identifier.

In some alternative embodiments, the operation of accessing the target wireless network based on the authentication information includes: sending the authentication information to a network authentication server; receiving an authentication result sent by the network authentication server; and accessing the target wireless network in a case where the authentication result is that the login authority authentication is passed. The method of acquiring the authentication information by scanning a target two-dimensional code, and accessing the target wireless network based on the authentication information is simple, so that the target device may quickly access the wireless network.

In some alternative embodiments, the authentication information for logging in to the target wireless network includes account and password information of the target wireless network. The target device may quickly access the target wireless network based on the account and password information of the target wireless network.

In some alternative embodiments, the authentication information for logging in to the target wireless network includes an account of the target wireless network, and the operation of accessing the target wireless network based on the authentication information includes: determining, by the oral scanning device, whether the account of the target wireless network is one of pre-stored accounts of a plurality of wireless networks according to the account of the target wireless network and the pre-stored accounts and passwords of the plurality of wireless networks; when the account of the target wireless network is one of the pre-stored accounts of the plurality of wireless networks, accessing the target wireless network based on the account of the target wireless network and the pre-stored password of the target wireless network; and when the account of the target wireless network is not one of the stored accounts of the plurality of wireless networks, receiving, by the oral scanning device, the password of the target wireless network, and accessing the target wireless network based on the account and the password of the target wireless network. In some alternative embodiments, in response to the account of the target wireless network is not one of the pre-stored accounts of the plurality of wireless networks, the password of the target wireless network is entered in the oral scanning device, and the target wireless network is accessed based on the account and the password of the target wireless network.

In some alternative embodiments, the oral scanning device may store the account of the wireless network that has been connected and the password information entered by a user. When the oral scanning device is to be connected to the wireless network that has been connected, the user does not need to enter the password. When the oral scanning device is to be connected to a wireless network that has not been connected, the corresponding password of the wireless network needs to be entered. The user only needs to enter the password when connecting to the target wireless network that has not been connected before, thereby improving the speed of wireless network connection and improving the user experience.

In some alternative embodiments, there are various types of target identifiers. For example, the target identifier may include a one-dimensional barcode, a two-dimensional barcode, a marker point image, a three-dimensional image, a four-dimensional image, and the like.

In some alternative embodiments, the user may generate the target identifier of the corresponding type as needed. The marker point image is composed of one or more marker points of different patterns, shapes, color differences, and sizes, and may contain the authentication information for logging into the target wireless network, or other information. Fig. 2, Fig. 3, and Fig. 4 are schematic diagrams of alternative marker point images provided according to embodiments of the present disclosure. The marker point image shown in Fig. 2 may also contain position information, the marker point image shown in Fig. 3 may also contain position information and phase information, and the marker point image shown in Fig. 4 is a marker point image having a reverse color difference. Compared with the one-dimensional barcode, the two-dimensional barcode, the three-dimensional image, and the four-dimensional image, the marker point image has the advantages of compact structure and small size, which makes the marker point image more suitable for the oral scanning devices with the smaller scanning heads. Therefore, when the oral scanning device accesses the target wireless network by a method of scanning the target identifier, the marker point image may be selected as the target identifier, and based on the marker point image, the oral scanning device may quickly and completely scan the target identifier to acquire the authentication information for logging in to the target wireless network, which is contained in the target identifier, so as to achieve the purpose of quickly accessing the target wireless network, and improve the user experience. In addition, the structural characteristics of the marker point image determine that the marker point image is more suitable for the oral scanning device, an ordinary device is difficult to identify the information contained in the marker point image, and the authentication information for logging in to the target wireless network is acquired through the marker point image, which may achieve a better encryption effect. It is to be understood that the one-dimensional barcode, the two-dimensional barcode, the three-dimensional image, and the four-dimensional image may contain more information, so that when the user needs to acquire more authentication information for logging into the target wireless network by scanning the target identifier, the one-dimensional barcode, the two-dimensional barcode, the three-dimensional image, or the four-dimensional image may also be selected as the target identifier. By flexibly selecting the applicable target identifier, the user experience may be improved.

In some alternative embodiments, the target device scans the target identifier, where the target identifier includes: the marker point image generated by a target terminal in a case where the target device has been connected to the target wireless network, the one-dimensional barcode generated by the target terminal in a case where the target device has not been connected to the target wireless network, and the two-dimensional barcode generated by the target terminal in a case where the target device has not been connected to the target wireless network.

In some alternative embodiments, in a case where the target device has been connected to the target wireless network, the target device stores the account and password information of the target wireless network, so that in a case where the target device has been connected to the target wireless network, the target device acquires the account of the target wireless network contained in the marker point image by scanning the marker point image containing only the account of the target wireless network, and accesses the target wireless network based on the password of the target wireless network pre-stored in the target device. In a case where the target device has not been connected to the target wireless network, the target wireless network may be accessed by one of the following methods: acquiring the account and password information for connecting to the target wireless network by scanning the one-dimensional barcode or the two-dimensional barcode containing the account and password information of the wireless network, and accessing the target wireless network based on the acquired account and password information; and acquiring the account of the target wireless network by scanning the one-dimensional barcode or the two-dimensional barcode containing the account information of the wireless network, entering the password of the target wireless network in the target device, and accessing the target wireless network according to the account and the password of the target wireless network. The user flexibly selects the corresponding target identifier according to whether the target device has accessed the target wireless network, and accesses the wireless network based on the corresponding target identifier, thereby improving the user experience and enabling the target device to quickly access the target wireless network.

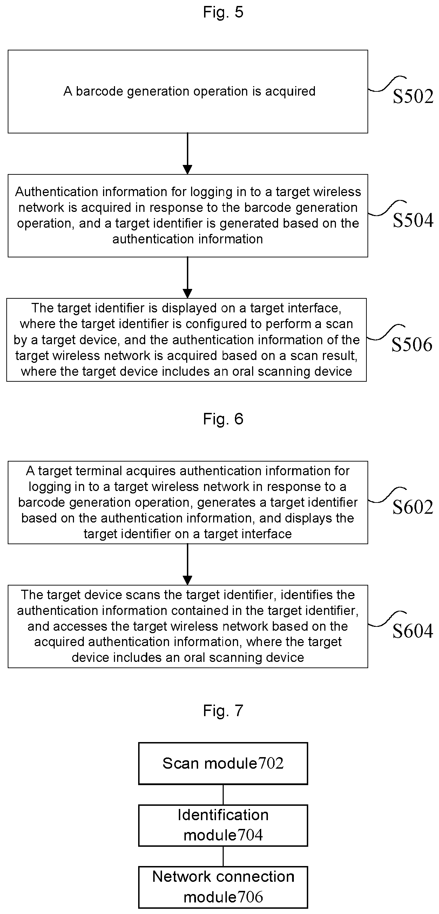

Fig. 5 is a flowchart of a method for a device to access a wireless network according to embodiments of the present disclosure. Referring to Fig.5, the method for the device to access the wireless network may include the following steps.

At S502, a barcode generation operation is acquired.

At S504, authentication information for logging in to a target wireless network is acquired in response to the barcode generation operation, and a target identifier is generated based on the authentication information.

At S506, the target identifier is displayed on a target interface, where the target identifier is configured to perform a scan by a target device, and the authentication information of the target wireless network is acquired based on a scan result, where the target device includes an oral scanning device.

In some alternative embodiments, an executive subject of generating the target identifier is a terminal device. There may be various types of terminal devices, for example, a computer, a mobile phone, a tablet computer, and the like. The target wireless network may be a WiFi network, a hotspot network, or the like.

In the above embodiments, the terminal device is provided with barcode generation software, and the barcode generation software includes an account and password entry interface for the wireless network. A user enters an account and a password of the target wireless network in the account and password entry interface and clicks a barcode generation control, and the barcode generation software generates the target identifier in response to the above barcode generation operation, and displays the generated target identifier on the target interface. The target device performs a scan, acquires the authentication information of the target wireless network based on a scan result, and accesses the target wireless network based on the authentication information. Therefore, the authentication information of the target wireless network may be acquired through the target identifier without installing a Bluetooth apparatus on the target device, and the target wireless network may be quickly accessed. Because there is no need to install the Bluetooth apparatus, the size of the target device is small and the user experience is improved. The technical problem in the related art that a wireless oral scanning device cannot conveniently and quickly access the wireless network is solved.

In some alternative embodiments, the operation of acquiring authentication information for logging in to a target wireless network in response to the barcode generation operation, and generating a target identifier based on the authentication information includes: acquiring a model of the target device; acquiring a barcode size corresponding to the model of the target device based on the model of the target device; and generating the target identifier based on the barcode size. It is to be understood that the size of the oral scanning device is usually relatively small, and the size of a scanning head of the oral scanning device is also relatively small. The target identifier is generated based on the barcode size corresponding to the model of the oral scanning device, and the size of the target identifier is matched with the size of the scanning head of the oral scanning device, so that the oral scanning device may scan the complete target identifier and successfully acquire the information contained in the target identifier, thereby avoiding the problem that the complete target identifier cannot be scanned due to the mismatch between the size of the target identifier and the size of the scanning head.

Fig. 6 is a flowchart of yet another method for a device to access a wireless network according to embodiments of the present disclosure. Referring Fig. 6, the method may include the following steps.

At S602, a target terminal acquires authentication information for logging in to a target wireless network in response to a barcode generation operation, generates a target identifier based on the authentication information, and displays the target identifier on a target interface.

At S604, the target device scans the target identifier, identifies the authentication information contained in the target identifier, and accesses the target wireless network based on the acquired authentication information, where the target device includes an oral scanning device.

In some alternative embodiments, the target terminal generates the target identifier and displays the target identifier on the target interface, and the target scanning device accesses the target wireless network by scanning the target identifier. Therefore, the target wireless network may be quickly accessed through the target identifier without installing a Bluetooth apparatus on the target device. Because there is no need to install the Bluetooth apparatus, the size of the target device is small and the user experience is improved. The technical problem in the related art that a wireless oral scanning device cannot conveniently and quickly access the wireless network is solved.

Based on the above embodiments and alternative embodiments, the alternative implementations provide the method for the device to access the wireless network.

In the alternative implementation, the target terminal being a computer, the barcode being a two-dimensional barcode (two-dimensional code), and the wireless network connected to the oral scanning device being WiFi are taken as examples for description. It is to be understood that the target terminal is not limited to the computer, but may also be the terminal device such as a mobile phone or a tablet computer. The barcode is not limited to the above two-dimensional code, but may also be a one-dimensional barcode, a marker point image, a three-dimensional image, a four-dimensional image, and the like. The wireless network connected to the oral scanning device is not limited to the WiFi, but may also be a mobile hotspot.

It is to be understood that the wireless oral scanning device achieves device control and image acquisition by the computer and the device through the WiFi, and the computer and the oral scanning device need to be located in the same WiFi network. In order to connect the oral scanning device to a specific WiFi network, i.e., network distribution, the device needs to be told a Service Set Identifier (SSID) (i.e. WiFi name) of the WiFi and a password. In the related art, WiFi information is sent to the device through Bluetooth. The method has the disadvantages that the method of sending the WiFi information to the device through Bluetooth requires the device to add Bluetooth hardware, and at the same time, the computer needs to be connected to the device Bluetooth first to send the information.

In the related art, the device may also be first changed into an Access Point (AP) mode (wireless AP mode), the computer is connected to the hotspot of the device through the WiFi, then the final WiFi information that needs to be connected is sent to the device, then an AP of the device is disconnected, and finally the purpose of connecting the device to a specified WiFi is achieved. The method has the following disadvantages: the method of changing the device into the AP first is complicated, requires a plurality of steps, is inconvenient to operate, and has a slow network distribution speed. That is, in the related art, there is a technical problem that the wireless oral scanning device cannot conveniently and quickly access a wireless network.

In view of this, in the alternative implementations, the target device scans the target identifier, where the target identifier contains the authentication information for logging in to the target wireless network, and the target device includes the oral scanning device; the authentication information for logging in to the target wireless network, which is contained in the target identifier, is identified; and the target wireless network is accessed based on the authentication information, thereby solving the technical problem in the related art that the wireless oral scanning device cannot conveniently and quickly access the wireless network. The following is a detailed description.

At S1, the computer is connected to the specified WiFi.

At S2, a user enters account and password information of the WiFi in the computer.

At S3, model information of the oral cavity scanning device or a window for entering the model information of the oral cavity scanning device is displayed on an interactive interface of the computer, the user selects the model information of the target oral cavity scanning device or enters the model information of the oral cavity scanning device, and the computer determines the size of the two-dimensional code according to the model information.

The sizes of the scanning heads of different models of oral scanning devices may be different, the size of the two-dimensional code is determined according to the model information, and the two-dimensional code matched with the size of the scanning head of the target oral scanning device may be generated. It is to be understood that the scanning head of the oral scanning device is usually relatively small, and the size of the two-dimensional code is determined according to the model information, which may avoid the problem that the oral scanning device cannot scan the two-dimensional code due to the fact that the size of the generated two-dimensional code is too large.

At S4, the computer generates the two-dimensional code containing WiFi authentication information according to the account and password information of the WiFi, and displays the two-dimensional code containing the WiFi authentication information on a screen. The WiFi authentication information includes the account and password information of the WiFi.

At S5, the oral scanning device determines whether it is in the code scanning mode, if so, the two-dimensional code displayed on the computer screen is directly scanned, otherwise the code scanning mode is switched first and the two-dimensional code displayed on the computer screen is scanned in the code scanning mode.

At S6, the oral scanning device parses the two-dimensional code and acquires the account and password information of the WiFi contained in the two-dimensional code.

At S7, the oral scanning device completes network distribution according to the parsed account and password information of the WiFi.

When the user enters an incorrect WiFi password, the oral scanning device fails to distribute the network. In this case, the oral scanning device may remind the user of the network distribution failure through an indicator light, and the user re-enters the account and the password pf the WiFi on the computer according to a prompt, so that the computer regenerates the two-dimensional code.

The oral scanning device may also be provided with the indicator light to remind the user that the network distribution is successful. In a case where the network distribution is successful, the indicator light informs the user that the network distribution of the oral scanning device is successful.

In the alternative implementations, the oral scanning device does not need to be provided with a Bluetooth device, and may achieve network distribution by scanning the two-dimensional code, which solves the problem in the related art that the size of the oral scanning device is increased due to the arrangement of the Bluetooth device. A disclosure of the oral scanning device directly parses the two-dimensional code and may acquire the account and password information of the WiFi without the help of other computing devices, thereby improving the processing speed of network distribution.

### Embodiment 2

According to the embodiments of the present disclosure, an apparatus configured to implement the above method for the device to access the wireless network is further provided. Fig. 7 is a structural block diagram of an alternative apparatus for a device to access a wireless network according to embodiments of the present disclosure. Referring to Fig. 7, the apparatus includes a scan module 702, an identification module 704, and a network connection module 706. The following is a detailed description.

The scan module 702 is configured to scan a target identifier, where the target identifier contains authentication information for logging in to a target wireless network, and the target device includes an oral scanning device. The identification module 704 is connected to the scan module 702, and is configured to identify the authentication information for logging in to the target wireless network, which is contained in the target identifier. The network connection module 706 is connected to the identification module 704, and is configured to access the target wireless network based on the authentication information.

It is to be noted herein that the above scan module 702, the identification module 704, and the network connection module 706 correspond to S102 to 106 in Embodiment 1, and the three modules are the same as the examples and disclosure scenarios implemented by the corresponding steps, but are not limited to the contents disclosed in Embodiment 1. It is to be noted that the above modules may run in a computer terminal 10 provided by Embodiment 1 as part of the apparatus.

The embodiments of the present disclosure further provide a non-volatile storage medium, including a stored program. The program, when running, controls a device where the storage medium is located to perform any one of the above methods for the device to access the wireless network.

Alternatively, in some embodiments, the above non-volatile storage medium may be configured to store program codes executed by the method for the device to access the wireless network provided by Embodiment 1.

Alternatively, in some embodiments, the non-volatile storage medium may be located in any one computer terminal in a computer terminal set in a computer network or in any one mobile terminal in a mobile terminal set.

Alternatively, in some embodiments, the non-volatile storage medium is configured to store program codes for performing the following steps: scanning, by a target device, target identifier, where the target identifier contains authentication information for logging in to a target wireless network, and the target device includes an oral scanning device; identifying the authentication information for logging in to the target wireless network, which is contained in target identifier; and accessing the target wireless network based on the authentication information.

Alternatively, the target identifier is generated based on a barcode size corresponding to a model of the target device.

Alternatively, in some embodiments, the non-volatile storage medium is configured to store program codes for performing the following steps: determining whether the target device is in a code scanning mode; and in a case where the target device is not in the code scanning mode, switching the target device to the code scanning mode.

Alternatively, in some embodiments, the non-volatile storage medium is configured to store program codes for performing the following steps: sending the authentication information to a network authentication server; receiving an authentication result sent by the network authentication server; and accessing the target wireless network in a case where the authentication result is that the login authority authentication is passed.

Alternatively, the authentication information for logging in to the target wireless network includes account and password information of the target wireless network.

Alternatively, in some embodiments, the non-volatile storage medium is configured to store program codes for performing the following steps that: the authentication information for logging in to the target wireless network includes an account of the target wireless network, and the operation of accessing the target wireless network based on the authentication information includes: determining, by the oral scanning device, whether the account of the target wireless network is one of pre-stored accounts of a plurality of wireless networks according to the account of the target wireless network and the pre-stored accounts and passwords of the plurality of wireless networks; when the account of the target wireless network is one of the pre-stored accounts of the plurality of wireless networks, accessing the target wireless network based on the account of the target wireless network and the pre-stored password of the target wireless network; and/or when the account of the target wireless network is not one of the stored accounts of the plurality of wireless networks, receiving, by the oral scanning device, the password of the target wireless network, and accessing the target wireless network based on the account and the password of the target wireless network.

Alternatively, in some embodiments, the non-volatile storage medium is configured to store program codes for performing the following steps that: the target identifier includes one of the following: a one-dimensional barcode, a two-dimensional barcode, and a marker point image; the target device scans the target identifier, where the target identifier includes one of the following: the marker point image generated by a target terminal in a case where the target device has been connected to the target wireless network, the one-dimensional barcode generated by the target terminal in a case where the target device has not been connected to the target wireless network, and the two-dimensional barcode generated by the target terminal in a case where the target device has not been connected to the target wireless network.

Alternatively, in some embodiments, the non-volatile storage medium is configured to store program codes for performing the following steps: receiving a barcode generation operation; acquiring the authentication information for logging in to the target wireless network in response to the barcode generation operation, and generating a target identifier based on the authentication information; and displaying the target identifier on the target interface, where the target identifier is configured to perform a scan by the target device, and acquiring the authentication information of the target wireless network based on a scan result, where the target device includes the oral scanning device.

Alternatively, the operation of acquiring the authentication information for logging in to the target wireless network in response to the barcode generation operation, and generating the target identifier based on the authentication information includes: acquiring a model of the target device; acquiring the barcode size corresponding to the model of the target device based on the model of the target device; and generating the target identifier based on the barcode size.

Alternatively, in some embodiments, the non-volatile storage medium is configured to store program codes for performing the following steps: acquiring, by the target terminal, the authentication information for logging in to the target wireless network in response to the barcode generation operation, generating the target identifier based on the authentication information, and displaying the target identifier on a target interface; and scanning, by the target device, the target identifier, identifying the authentication information contained in the target identifier, and accessing the target wireless network based on the acquired authentication information, where the target device includes the oral scanning device.

The serial numbers of the foregoing embodiments of the present disclosure are merely for description, and do not represent the superiority or inferiority of the embodiments.

In the above embodiments of the present disclosure, the description of the embodiments has its own focus. For parts that are not described in detail in a certain embodiment, reference may be made to related descriptions of other embodiments.

In the several embodiments provided in the present disclosure, it is to be understood that, the disclosed technical content may be implemented in other ways. The apparatus embodiments described above are merely illustrative. For example, the division of the units may be a logical function division, and there may be other divisions in actual implementation. For example, a plurality of units or components may be combined or integrated into another system, or some features may be ignored, or not implemented. In addition, the displayed or discussed mutual coupling or direct coupling or communication connection may be indirect coupling or communication connection through some interfaces, units or modules, and may be in electrical or other forms. The units described as separate components may or may not be physically separated.

The units described as separate components may or may not be physically separated. The components displayed as units may or may not be physical units, that is, the components may be located in one place, or may be distributed on the plurality of units. Part or all of the units may be selected according to actual requirements to achieve the purposes of the solutions of this embodiment.

In addition, functional units in some embodiments of the present disclosure may be integrated into one processing unit, or each of the units may exist alone physically, or two or more units are integrated into one unit. The above integrated unit may be implemented in the form of hardware, or may be implemented in the form of a software functional unit.

Wherein being implemented in form of software functional unit and sold or used as an independent product, the integrated unit may be stored in a computer-readable storage medium. Based on this understanding, the technical solutions of the present disclosure essentially or the parts that contribute to the prior art, or all or part of the technical solutions may be embodied in the form of a software product. The computer software product is stored in a storage medium, including a plurality of instructions for causing a computer device (which may be a personal computer, a server, or a network device, and the like) to execute all or part of the steps of the method described in the various embodiments of the present disclosure. The foregoing storage medium includes a USB flash disk, a Read-Only Memory (ROM), a Random Access Memory (RAM), and various media that may store program codes, such as a mobile hard disk, a magnetic disk, or an optical disk.

The above is only preferred implementations of the present disclosure, and it is to be noted that those of ordinary skill in the art may also make several improvements and refinements without departing from the principle of the present disclosure, and it should be considered that these improvements and refinements shall all fall within the scope of protection of the present disclosure.

### Industrial Applicability

Embodiments of the present disclosure provide a method and apparatus for a device to access a wireless network, and a storage medium, which are applied to the field of data processing. In the embodiments of the present disclosure, a target device scans a target identifier, where the target identifier contains authentication information for logging in to a target wireless network, and the target device includes an oral scanning device; the authentication information for logging in to the target wireless network, which is contained in the target identifier, is identified; and the target wireless network is accessed based on the authentication information, thereby achieving the technical effect that the wireless oral scanning device conveniently and quickly accesses the wireless network.

## Claims

1. A method for a device to access a wireless network, comprising:
scanning (S102), by a target device, a target identifier, wherein the target identifier contains authentication information for logging in to a target wireless network, and the target device comprises an oral scanning device, **characterized in that** the target identifier is generated based on a barcode size corresponding to a model of the target device;
identifying (S104) the authentication information for logging in to the target wireless network, which is contained in the target identifier; and
accessing (S106) the target wireless network based on the authentication information.

2. The method as claimed in claim 1, wherein before the target device scans the target identifier, the method further comprises:
determining whether the target device is in a code scanning mode; and
in a case where the target device is not in the code scanning mode, switching the target device to the code scanning mode.

3. The method as claimed in claim 1, wherein the accessing the target wireless network based on the authentication information comprises:
sending the authentication information to a network authentication server;
receiving an authentication result sent by the network authentication server; and
accessing the target wireless network in a case where the authentication result is that the login authority authentication is passed.

4. The method as claimed in any one of claims 1 to 3, wherein the authentication information for logging in to the target wireless network comprises account and password information of the target wireless network.

5. The method as claimed in any one of claims 1 to 3, wherein the authentication information for logging in to the target wireless network comprises an account of the target wireless network, and the accessing the target wireless network based on the authentication information comprises:
determining, by the oral scanning device, whether the account of the target wireless network is one of pre-stored accounts of a plurality of wireless networks as claimed in the account of the target wireless network and the pre-stored accounts and passwords of the plurality of wireless networks;
wherein the account of the target wireless network is one of the pre-stored accounts of the plurality of wireless networks, accessing the target wireless network based on the account of the target wireless network and the pre-stored password of the target wireless network;
and/or when the account of the target wireless network is not one of the stored accounts of the plurality of wireless networks, receiving, by the oral scanning device, the password of the target wireless network, and accessing the target wireless network based on the account and the password of the target wireless network.

6. The method as claimed in claim 5, wherein the target identifier comprises one of the following: a one-dimensional barcode, a two-dimensional barcode, and a marker point image.

7. The method as claimed in claim 5, the target device scans the target identifier, wherein the target identifier comprises one of the following: the marker point image generated by a target terminal in a case where the target device has been connected to the target wireless network, the one-dimensional barcode generated by the target terminal in a case where the target device has not been connected to the target wireless network, and the two-dimensional barcode generated by the target terminal in a case where the target device has not been connected to the target wireless network.

8. The method as claimed in claim 6, wherein the marker point image comprises: position information; or the marker point image comprises: position information and phase information.

9. The method as claimed in claim 7, wherein the marker point image is a marker point image having a reverse color difference.

10. A method for a device to access a wireless network, comprising:
acquiring (S502) a barcode generation operation;
acquiring (S504) authentication information for logging in to a target wireless network in response to the barcode generation operation, and generating a target identifier based on the authentication information, **characterized in that** the target identifier is generated based on a barcode size corresponding to a model of the target device; and
displaying (S506) the target identifier on a target interface, wherein the target identifier is configured to perform a scan by a target device, and acquiring the authentication information of the target wireless network based on a scan result, wherein the target device comprises an oral scanning device; and is configured to access the target wireless network based on the authentication information.

11. The method as claimed in claim 10, wherein the acquiring authentication information for logging in to a target wireless network in response to the barcode generation operation, and generating a target identifier based on the authentication information comprises:
acquiring a model of the target device;
acquiring a barcode size corresponding to the model of the target device based on the model of the target device; and
generating the target identifier based on the barcode size.

12. An apparatus for a device to access a wireless network, configured to run in a target device, comprising:
a scan module (702), configured to scan a target identifier, wherein the target identifier contains authentication information for logging in to a target wireless network, and the target device comprises an oral scanning device, **characterized in that** the target identifier is generated based on a barcode size corresponding to a model of the target device;
an identification module (704), configured to identify the authentication information for logging in to the target wireless network, which is contained in the target identifier; and
a network connection module (706), configured to access the target wireless network based on the authentication information.

13. The apparatus as claimed in claim 12, wherein the network connection module (706) is configured to:
determine whether the account of the target wireless network is one of pre-stored accounts of a plurality of wireless networks as claimed in the account of the target wireless network and the pre-stored accounts and passwords of the plurality of wireless networks;
wherein the account of the target wireless network is one of the pre-stored accounts of the plurality of wireless networks, access the target wireless network based on the account of the target wireless network and the pre-stored password of the target wireless network;
and/or when the account of the target wireless network is not one of the stored accounts of the plurality of wireless networks, receive the password of the target wireless network, and access the target wireless network based on the account and the password of the target wireless network.

14. The apparatus as claimed in claim 13, wherein the target identifier comprises one of the following: a one-dimensional barcode, a two-dimensional barcode, and a marker point image;
the scan module (702) scans the target identifier, wherein the target identifier comprises one of the following: the marker point image generated by a target terminal in a case where the target device has been connected to the target wireless network, the one-dimensional barcode generated by the target terminal in a case where the target device has not been connected to the target wireless network, and the two-dimensional barcode generated by the target terminal in a case where the target device has not been connected to the target wireless network.

## Patentansprüche

1. Verfahren für eine Vorrichtung zum Zugriff auf ein drahtloses Netzwerk, umfassend:
Abtasten (S102) eines Zielidentifikators durch eine Zielvorrichtung, wobei der Zielidentifikator Authentifizierungsinformationen zum Anmelden bei einem drahtlosen Zielnetzwerk enthält und die Zielvorrichtung eine orale Abtastvorrichtung umfasst, **dadurch gekennzeichnet, dass** der Zielidentifikator basierend auf einer Barcodegröße erzeugt wird, die einem Modell der Zielvorrichtung entspricht;
Identifizieren (S104) der Authentifizierungsinformationen für die Anmeldung im drahtlosen Zielnetzwerk, die im Zielidentifikator enthalten sind; und
Zugreifen (S106) auf das drahtlose Zielnetzwerk basierend auf den Authentifizierungsinformationen.

2. Verfahren nach Anspruch 1, wobei, bevor die Zielvorrichtung den Zielidentifikator abtastet, das Verfahren ferner Folgendes umfasst:
Bestimmen, ob sich die Zielvorrichtung in einem Codeabtastmodus befindet; und
in einem Fall, in dem sich die Zielvorrichtung nicht im Codeabtastmodus befindet, Umschalten der Zielvorrichtung in den Codeabtastmodus.

3. Verfahren nach Anspruch 1, wobei das Zugreifen auf das drahtlose Zielnetzwerk basierend auf den Authentifizierungsinformationen Folgendes umfasst:
Senden der Authentifizierungsinformationen an einen Netzwerkauthentifizierungsserver;
Empfangen eines vom Netzwerkauthentifizierungsserver gesendeten Authentifizierungsergebnisses; und
Zugreifen auf das drahtlose Zielnetzwerk in einem Fall, in dem das Authentifizierungsergebnis lautet, dass die Anmeldeautoritätsauthentifizierung bestanden wurde.

4. Verfahren nach einem der Ansprüche 1 bis 3, wobei die Authentifizierungsinformationen zum Anmelden bei dem drahtlosen Zielnetzwerk Konto- und Passwortinformationen des drahtlosen Zielnetzwerks umfassen.

5. Verfahren nach einem der Ansprüche 1 bis 3, wobei die Authentifizierungsinformationen zum Anmelden bei dem drahtlosen Zielnetzwerk ein Konto des drahtlosen Zielnetzwerks umfassen und das Zugreifen auf das drahtlose Zielnetzwerk basierend auf den Authentifizierungsinformationen Folgendes umfasst:
Bestimmen, durch die mündliche Abtastvorrichtung, ob das Konto des drahtlosen Zielnetzwerks eines der vorgespeicherten Konten einer Vielzahl von drahtlosen Netzwerken ist, wie im Konto des drahtlosen Zielnetzwerks und den vorgespeicherten Konten und Passwörtern der Vielzahl von drahtlosen Netzwerken angegeben;
wobei das Konto des drahtlosen Zielnetzwerks eines der vorgespeicherten Konten der Vielzahl von drahtlosen Netzwerken ist, wobei das Zugreifen auf das drahtlose Zielnetzwerk auf dem Konto des drahtlosen Zielnetzwerks und dem vorgespeicherten Passwort des drahtlosen Zielnetzwerks basiert; und/oder wenn das Konto des drahtlosen Zielnetzwerks nicht eines der gespeicherten Konten der Vielzahl von drahtlosen Netzwerken ist, Empfangen des Passworts des drahtlosen Zielnetzwerks durch die orale Abtastvorrichtung und Zugreifen auf das drahtlose Zielnetzwerk basierend auf dem Konto und dem Passwort des drahtlosen Zielnetzwerks.

6. Verfahren nach Anspruch 5, wobei der Zielidentifikator eines von Folgendem umfasst: einen eindimensionalen Barcode, einen zweidimensionalen Barcode und ein Markerpunktbild.

7. Verfahren nach Anspruch 5, wobei die Zielvorrichtung den Zielidentifikator abtastet, wobei der Zielidentifikator eines von Folgendem umfasst: das von einem Zielterminal erzeugte Markierungspunktbild in einem Fall, in dem die Zielvorrichtung mit dem drahtlosen Zielnetzwerk verbunden wurde, den vom Zielterminal erzeugten eindimensionalen Barcode in einem Fall, in dem die Zielvorrichtung nicht mit dem drahtlosen Zielnetzwerk verbunden wurde, und den vom Zielterminal erzeugten zweidimensionalen Barcode in einem Fall, in dem die Zielvorrichtung nicht mit dem drahtlosen Zielnetzwerk verbunden wurde.

8. Verfahren nach Anspruch 6, wobei das Markierungspunktbild Folgendes umfasst: Positionsinformationen; oder das Markierungspunktbild Folgendes umfasst: Positionsinformationen und Phaseninformationen.

9. Verfahren nach Anspruch 7, wobei das Markerpunktbild ein Markerpunktbild ist, das eine umgekehrte Farbdifferenz aufweist.

10. Verfahren für eine Vorrichtung zum Zugriff auf ein drahtloses Netzwerk, umfassend:
Erfassen (S502) einer Barcodeerzeugungsoperation;
Erfassen (S504) von Authentifizierungsinformationen zum Anmelden bei einem drahtlosen Netzwerk als Reaktion auf die Barcodeerzeugungsoperation, und Erzeugen eines Zielidentifikators basierend auf den Authentifizierungsinformationen, **dadurch gekennzeichnet, dass** der Zielidentifikator basierend auf einer Barcodegröße erzeugt wird, die einem Modell der Zielvorrichtung entspricht; und
Anzeigen (S506) des Zielidentifikators auf einer Zielschnittstelle, wobei der Zielidentifikator konfiguriert ist, um eine Abtastung durch eine Zielvorrichtung durchzuführen, und Erfassen der Authentifizierungsinformationen des drahtlosen Zielnetzwerks basierend auf einem Abtastergebnis, wobei die Zielvorrichtung eine orale Abtastvorrichtung umfasst; und konfiguriert ist, um auf das drahtlose Zielnetzwerk basierend auf den Authentifizierungsinformationen zuzugreifen.

11. Verfahren nach Anspruch 10, wobei das Erfassen von Authentifizierungsinformationen zum Anmelden bei einem drahtlosen Netzwerk als Reaktion auf die Barcodeerzeugungsoperation und das Erzeugen eines Zielidentifikators basierend auf den Authentifizierungsinformationen Folgendes umfasst:
Erfassen eines Modells der Zielvorrichtung;
Erfassen einer Barcodegröße, die dem Modell der Zielvorrichtung entspricht, basierend auf dem Modell der Zielvorrichtung; und
Erzeugen des Zielidentifikators basierend auf der Barcodegröße.

12. Gerät für eine Vorrichtung zum Zugriff auf ein drahtloses Netzwerk, das konfiguriert ist, um in einer Zielvorrichtung zu laufen, umfassend:
ein Abtastmodul (702), das konfiguriert ist, um einen Zielidentifikator abzutasten, wobei der Zielidentifikator Authentifizierungsinformationen zum Anmelden bei einem drahtlosen Zielnetzwerk enthält und die Zielvorrichtung eine orale Abtastvorrichtung umfasst, **dadurch gekennzeichnet, dass** der Zielidentifikator basierend auf einer Barcodegröße erzeugt wird, die einem Modell der Zielvorrichtung entspricht;
ein Identifizierungsmodul (704), das konfiguriert ist, um die Authentifizierungsinformationen zum Anmelden bei dem drahtlosen Netzwerk zu identifizieren, die in der Zielkennung enthalten sind; und
ein Netzwerkverbindungsmodul (706), das konfiguriert ist, um auf das drahtlose Zielnetzwerk basierend auf den Authentifizierungsinformationen zuzugreifen.

13. Gerät nach Anspruch 12, wobei das Netzwerkverbindungsmodul (706) konfiguriert ist zum:
Bestimmen, ob das Konto des drahtlosen Zielnetzwerks eines der vorgespeicherten Konten einer Vielzahl von drahtlosen Netzwerken ist, wie im Konto des drahtlosen Zielnetzwerks und den vorgespeicherten Konten und Passwörtern der Vielzahl von drahtlosen Netzwerken angegeben;
wobei das Konto des drahtlosen Zielnetzwerks eines der vorgespeicherten Konten der Vielzahl von drahtlosen Netzwerken ist, wobei das Zugreifen auf das drahtlose Zielnetzwerk auf dem Konto des drahtlosen Zielnetzwerks und dem vorgespeicherten Passwort des drahtlosen Zielnetzwerks basiert; und/oder wenn das Konto des drahtlosen Zielnetzwerks nicht zu den gespeicherten Konten der Vielzahl von drahtlosen Netzwerken gehört, Empfangen des Passworts des drahtlosen Zielnetzwerks und Zugreifen auf das drahtlose Zielnetzwerk basierend auf dem Konto und dem Passwort des drahtlosen Zielnetzwerks.

14. Gerät nach Anspruch 13, wobei der Zielidentifikator eines von Folgendem umfasst: einen eindimensionalen Barcode, einen zweidimensionalen Barcode und ein Markerpunktbild;
das Abtastmodul (702) den Zielidentifikator abtastet, wobei der Zielidentifikator eines von Folgendem umfasst: das von einem Zielterminal erzeugte Markerpunktbild in einem Fall, in dem die Zielvorrichtung mit dem drahtlosen Zielnetzwerk verbunden wurde, den vom Zielterminal erzeugten eindimensionalen Barcode in einem Fall, in dem die Zielvorrichtung nicht mit dem drahtlosen Zielnetzwerk verbunden wurde, und den vom Zielterminal erzeugten zweidimensionalen Barcode in einem Fall, in dem die Zielvorrichtung nicht mit dem drahtlosen Zielnetzwerk verbunden wurde.

## Revendications

1. Procédé permettant à un dispositif d'accéder à un réseau sans fil, comprenant :
le balayage (S102), par un dispositif cible, d'un identifiant cible, dans lequel l'identifiant cible contient des informations d'authentification permettant de se connecter à un réseau sans fil cible, et le dispositif cible comprend un dispositif de balayage oral, **caractérisé en ce que** l'identifiant cible est généré sur la base d'une taille de code-barres correspondant à un modèle du dispositif cible ;
l'identification (S104) des informations d'authentification permettant de se connecter au réseau sans fil cible, qui sont contenues dans l'identifiant cible ; et
l'accès (S106) au réseau sans fil cible sur la base des informations d'authentification.

2. Procédé selon la revendication 1, dans lequel, avant le balayage, par le dispositif cible, de l'identifiant cible, le procédé comprend en outre :
le fait de déterminer si le dispositif cible est dans un mode de balayage de code ; et
dans un cas où le dispositif cible n'est pas dans le mode de balayage de code, la commutation du dispositif cible vers le mode de balayage de code.

3. Procédé selon la revendication 1, dans lequel l'accès au réseau sans fil cible sur la base des informations d'authentification comprend :
l'envoi des informations d'authentification à un serveur d'authentification de réseau ;
la réception d'un résultat d'authentification envoyé par le serveur d'authentification de réseau ; et
l'accès au réseau sans fil cible dans un cas où le résultat d'authentification est tel que l'authentification d'autorité de connexion est passée.

4. Procédé selon l'une quelconque des revendications 1 à 3, dans lequel les informations d'authentification permettant de se connecter au réseau sans fil cible comprennent des informations de compte et de mot de passe du réseau sans fil cible.

5. Procédé selon l'une quelconque des revendications 1 à 3, dans lequel les informations d'authentification permettant de se connecter au réseau sans fil cible comprennent un compte du réseau sans fil cible, et l'accès au réseau sans fil cible sur la base des informations d'authentification comprend :
le fait de déterminer, par le dispositif de balayage oral, si le compte du réseau sans fil cible est l'un des comptes pré-stockés d'une pluralité de réseaux sans fil tels que revendiqués dans le compte du réseau sans fil cible et des comptes et mots de passe pré-stockés de la pluralité de réseaux sans fil ;
dans lequel le compte du réseau sans fil cible est l'un des comptes pré-stockés de la pluralité de réseaux sans fil, l'accès au réseau sans fil cible sur la base du compte du réseau sans fil cible et du mot de passe pré-stocké du réseau sans fil cible ; et/ou lorsque le compte du réseau sans fil cible n'est pas l'un des comptes stockés de la pluralité de réseaux sans fil, la réception, par le dispositif de balayage oral, du mot de passe du réseau sans fil cible, et l'accès au réseau sans fil cible sur la base du compte et du mot de passe du réseau sans fil cible.

6. Procédé selon la revendication 5, dans lequel l'identifiant cible comprend l'un parmi ce qui suit : un code-barres unidimensionnel, un code-barres bidimensionnel et une image de point de marqueur.

7. Procédé selon la revendication 5, le dispositif cible balaie l'identifiant cible, dans lequel l'identifiant cible comprend l'un parmi ce qui suit : l'image de point de marqueur générée par un terminal cible dans un cas où le dispositif cible a été connecté au réseau sans fil cible, le code-barres unidimensionnel généré par le terminal cible dans un cas où le dispositif cible n'a pas été connecté au réseau sans fil cible, et le code-barres bidimensionnel généré par le terminal cible dans un cas où le dispositif cible n'a pas été connecté au réseau sans fil cible.

8. Procédé selon la revendication 6, dans lequel l'image de point de marqueur comprend : des informations de position ; ou l'image de point de marqueur comprend : des informations de position et des informations de phase.

9. Procédé selon la revendication 7, dans lequel l'image de point de marqueur est une image de point de marqueur ayant une différence de couleur inversée.

10. Procédé permettant à un dispositif d'accéder à un réseau sans fil, comprenant :
l'acquisition (S502) d'une opération de génération de code-barres ;
l'acquisition (S504) d'informations d'authentification permettant de se connecter à un réseau sans fil cible en réponse à l'opération de génération de code-barres, et la génération d'un identifiant cible sur la base des informations d'authentification, **caractérisé en ce que** l'identifiant cible est généré sur la base d'une taille de code-barres correspondant à un modèle du dispositif cible ; et
l'affichage (S506) de l'identifiant cible sur une interface cible, dans lequel l'identifiant cible est configuré pour effectuer un balayage par un dispositif cible, et l'acquisition des informations d'authentification du réseau sans fil cible sur la base d'un résultat de balayage, dans lequel le dispositif cible comprend un dispositif de balayage oral ; et est configuré pour accéder au réseau sans fil cible sur la base des informations d'authentification.

11. Procédé selon la revendication 10, dans lequel l'acquisition d'informations d'authentification permettant de se connecter à un réseau sans fil cible en réponse à l'opération de génération de code-barres, et la génération d'un identifiant cible sur la base des informations d'authentification comprennent :
l'acquisition d'un modèle du dispositif cible ;
l'acquisition d'une taille de code-barres correspondant au modèle du dispositif cible sur la base du modèle du dispositif cible ; et
la génération de l'identifiant cible sur la base de la taille de code-barres.

12. Appareil permettant à un dispositif d'accéder à un réseau sans fil, configuré pour s'exécuter dans un dispositif cible, comprenant :
un module de balayage (702), configuré pour balayer un identifiant cible, dans lequel l'identifiant cible contient des informations d'authentification permettant de se connecter à un réseau sans fil cible, et le dispositif cible comprend un dispositif de balayage oral, **caractérisé en ce que** l'identifiant cible est généré sur la base d'une taille de code-barres correspondant à un modèle du dispositif cible ;
un module d'identification (704), configuré pour identifier les informations d'authentification permettant de se connecter au réseau sans fil cible, qui sont contenues dans l'identifiant cible ; et
un module de connexion réseau (706), configuré pour accéder au réseau sans fil cible sur la base des informations d'authentification.

13. Appareil selon la revendication 12, dans lequel le module de connexion réseau (706) est configuré pour :
déterminer si le compte du réseau sans fil cible est l'un des comptes pré-stockés d'une pluralité de réseaux sans fil tels que revendiqués dans le compte du réseau sans fil cible et des comptes et mots de passe pré-stockés de la pluralité de réseaux sans fil ;
dans lequel le compte du réseau sans fil cible est l'un des comptes pré-stockés de la pluralité de réseaux sans fil, accéder au réseau sans fil cible sur la base du compte du réseau sans fil cible et du mot de passe pré-stocké du réseau sans fil cible ; et/ou lorsque le compte du réseau sans fil cible n'est pas l'un des comptes stockés de la pluralité de réseaux sans fil, recevoir le mot de passe du réseau sans fil cible, et accéder au réseau sans fil cible sur la base du compte et du mot de passe du réseau sans fil cible.

14. Appareil selon la revendication 13, dans lequel l'identifiant cible comprend l'un parmi ce qui suit : un code-barres unidimensionnel, un code-barres bidimensionnel et une image de point de marqueur ;
le module de balayage (702) balaie l'identifiant cible, dans lequel l'identifiant cible comprend l'un parmi ce qui suit : l'image de point de marqueur générée par un terminal cible dans un cas où le dispositif cible a été connecté au réseau sans fil cible, le code-barres unidimensionnel généré par le terminal cible dans un cas où le dispositif cible n'a pas été connecté au réseau sans fil cible, et le code-barres bidimensionnel généré par le terminal cible dans un cas où le dispositif cible n'a pas été connecté au réseau sans fil cible.
